Europäisches Patentamt

European Patent Office

Office européen des brevets

(11) Veröffentlichungsnummer: **0 634 650 A2**

## EUROPÄISCHE PATENTANMELDUNG

(21) Anmeldenummer: **94107684.6**

(22) Anmeldetag: **18.05.94**

(51) Int. Cl.6: **G01N 27/416**

(30) Priorität: **12.07.93 DE 4323251**

(43) Veröffentlichungstag der Anmeldung:
**18.01.95 Patentblatt 95/03**

(84) Benannte Vertragsstaaten:
**AT BE CH DE DK ES FR GB GR IE IT LI LU MC NL PT SE**

(71) Anmelder: **Degussa Aktiengesellschaft**
**Weissfrauenstrasse 9**
**D-60311 Frankturt (DE)**

(72) Erfinder: **Ost, Karl**
**Heinrich-Heine-Strasse 5**
**D-63517 Rodenbach (DE)**
Erfinder: **Schwarz, Helmut**
**Mühlbachstrasse 28**
**D-63594 Hasselroth (DE)**
Erfinder: **Barenschee, Dr. Ernst Robert**
**Höhenstrasse 21**
**D-63454 Hanau (DE)**

(54) Verfahren und Vorrichtung zur kontinuierlichen Bestimmung der Konzentration von Wasserstoffperoxid und Oxidationsmitteln hierfür.

(57) Vorbekannte Verfahren zur kontinuierlichen Bestimmung der Konzentration von Wasserstoffperoxid oder Oxidationsmitteln hierfür in wäßrigen Lösungen sind teilweise störanfällig und/oder erfassen nur einen eng begrenzten Konzentrationsbereich.

Das erfindungsgemäße Verfahren zur $H_2O_2$-Konzentrationsbestimmung überwindet diese Probleme; es basiert auf der Messung der $O_2$-Konzentration sowohl in einem Verdünnungsstrom, dem zuvor ein Oxidationsmittel für $H_2O_2$ zugemischt wurde, als auch in einem aus diesem und einem Probenstrom gebildeten Reaktionsstrom, nach einer Reaktionszone mittels Sauerstoffelektroden und Ermittlung der $H_2O_2$-Konzentration aus den gemessenen $O_2$-Konzentrationen und dem Verdünnungsfaktor.

Die erfindungsgemäße Vorrichtung umfaßt Vorrichtungen zum Erhalt eines kontinuierlichen Probenstroms (5) und Verdünnugnstroms (14), eine Dosiervorrichtung (23) für das Oxidationsmittel, Mischvorrichtungen (12 und 7)) im Verdünnungs- und Reaktionsstrom (6), Vorrichtungen zur Messung der $O_2$-Konzentration (13 und 9) und zur Prozeßregelung (26).

EP 0 634 650 A2

Fig. 1/1

2

Die Erfindung richtet sich auf ein Verfahren und eine Vorrichtung zur kontinuierlichen Bestimmung der Konzentration von Wasserstoffperoxid oder Oxidationsmitteln hierfür in wäßrigen Lösungen. Das Verfahren gestattet es, die $H_2O_2$- oder die Oxidationsmittel-Konzentration im Bereich von etwa 0,001 bis etwa 30 Gew.-% in einfacher Weise kontinuierlich zu bestimmen und damit chemische Reaktionen unter Verwendung von Wasserstoffperoxid oder Oxidationsmitteln hierfür sicher zu steuern. Die Konzentrationsbestimmung basiert auf der Messung der $O_2$-Konzentration in einem Verdünnungsstrom und in einem aus diesem und einem Probenstrom gebildeten Reaktionsstrom, in welchem vor der $O_2$-Meßstelle Wasserstoffperoxid unter $O_2$-Bildung mit einem Oxidationsmittel oxidiert oder an einem Zersetzungskatalysator zersetzt wird.

Zur Bestimmung des $H_2O_2$-Gehalts wäßriger Lösungen eignen sich chemische Analysenmethoden, wobei sowohl die oxidierenden als auch die reduzierenden Eigenschaften von Wasserstoffperoxid ausgenützt werden. Beispielhaft wird auf die Titration mit Kaliumpermanganat oder Cer(IV)-sulfat bzw. mit Kaliumjodid/Thiosulfat hingewiesen. Derartige Titrationsverfahren lassen sich, wenn sich der Titrationsendpunkt auf potentiometrischem Weg indizieren läßt, auch in Analysenautomaten einsetzen und so zur periodischen, nicht aber kontinuierlichen Bestimmung des $H_2O_2$-Gehalts sich in der Zusammensetzung verändernder wäßriger Lösungen, wie $H_2O_2$ enthaltender Reaktionsgemische, verwenden. Ein weiterer wesentlicher Nachteil der auf der Oxidation von $H_2O_2$ basierenden Verfahren besteht ferner darin, daß die verwendeten starken Oxidationsmittel auch mit anderen in der zu bestimmenden Lösung enthaltenden organischen Bestandteilen reagieren können, so daß es in derartigen Fällen zu nicht tolerablen Fehlern kommt. In gleicher Weise können für die Titration eingesetzte Reduktionsmittel mit in der der zu bestimmenden Lösung enthaltenen anderen Oxidationsmitteln als $H_2O_2$ reagieren und damit zu Fehlern führen.

Eine kontinuierliche Bestimmung der $H_2O_2$-Konzentration auf der Basis einer Messung des Redoxpotentials ist auf sehr geringe $H_2O_2$-Konzentrationen begrenzt Beispielsweise läßt sich nach Zugabe eines konstanten Stroms einer $Fe^{2+}$-Lösung zu einem Strom der zu bestimmenden $H_2O_2$ enthaltenden Lösung mittels eines Platin/Kalomel-Elektrodenpaars ein Redoxpotential messen, aus welchem anhand von Eichdaten die $H_2O_2$-Konzentration ermittelt werden kann. Nachteilig an diesem Verfahren ist die Begrenzung auf Konzentrationswerte von unter etwa 1000 mg $H_2O_2$/l; zudem läßt sich bei vollständiger Oxidation des zugesetzten $Fe^{2+}$ zu $Fe^{3+}$ auch keine Aussage über den noch vorhandenen $H_2O_2$-Überschuß machen. Wie bei den Titrationsverfahren können auch hier Fehler infolge chemischer Wechselwirkungen mit anderen anwesenden Reduktions-/Oxidationsmitteln auftreten. Redoxmessungen sind somit zur kontinuierlichen Bestimmung der $H_2O_2$-Konzentration von Lösungen mit höherem und rasch wechselndem Gehalt an $H_2O_2$ und gegebenenfalls zusätzlich anderen Reduktions-/Oxidationsmitteln und damit auch zur Steuerung von Reaktionen unter Verwendung von Wasserstoffperoxid kaum heranzuziehen.

Die $H_2O_2$-Konzentration wäßriger Lösungen läßt sich photometrisch unter Verwendung kolorimetrischer Farbreagenzien, wie Natriummolybdat oder Titan-Reagenz, kontinuierlich bestimmen. Ein Nachteil photometrischer Verfahren besteht aber darin, daß hiermit nur sehr niedrige $H_2O_2$-Konzentrationen erfaßt werden können. Zusätzlich kann es zwischen dem Farbreagenz und anderen Bestandteilen als $H_2O_2$ in der zu bestimmenden Lösung zu farbverändernden Wechselwirkungen kommen, so daß eine genaue Konzentrationsbestimmung unmöglich wird; da auch trübe und gefärbte Lösungen zu Störungen führen, eignen sich photometrische Bestimmungsmethoden nur in Sonderfällen zur Steuerung von Reaktionen unter Verwendung von Wasserstoffperoxid.

Es ist bekannt, daß sich Wasserstoffperoxid in Gegenwart von Zersetzungskatalysatoren in Wasser und Sauerstoff zersetzen läßt. Geeignete Zersetzungskatalysatoren, welche metallischer, oxidischer oder salzartiger Natur sein können, sind z. B. solche, wie sie in der EP-A 0 129 854 oder in dem Buch "Hydrogen Peroxide" von W. Schumb (1955), S. 467-514 gelehrt werden. Besonders wirksam sind dabei unlösliche Katalysatoren aus der Reihe Platin und Palladium sowie Mangan- und Bleiverbindungen. Die Anwendung der Zersetzung von $H_2O_2$ in Gegenwart eines Zersetzungskatalysators mit nachgeschalteter Messung der $O_2$-Konzentration ist zwar zur Regelung der $H_2O_2$-Zugabe bei der cyanidischen Goldlaugung bekannt (siehe DE-PS en 36 37 082 und 38 30 703), jedoch handelt es sich stets um Reaktionslösungen mit einem $O_2$-Gehalt unter 20 mg/l und demgemäß niedriger $H_2O_2$-Konzentration Da in den genannten Verfahren bei der Messung der $O_2$-Konzentration mittels einer $O_2$-Elektrode stets die Summe aus dem in der Lösung vor der Zersetzung bereits gelösten und dem bei der Zersetzung gebildeten Sauerstoff erfaßt wird, bleibt offen, welcher Anteil auf $H_2O_2$ zurückzuführen ist.

Sehr niedrige $H_2O_2$-Konzentrationen - etwa $10^{-3}$ bis $10^{-6}$ Mol/l - wäßriger Lösungen lassen sich auch unter Verwendung der Fließ-Injektions-Technik und einer Clark-Sauerstoffelektrode, auf deren Oberfläche sich ein Zersetzungskatalysator, wie Mangan- oder Bleidioxid oder das Enzym Catalase, immobilisiert befindet - siehe Analyst, Dec. 1989, Vol. 114, S. 1627-1632 - bestimmen. Während Elektroden mit einer Catalase-Membran nur eine sehr begrenzte Standzeit aufweisen, sind solche mit einer $MnO_2$-haltigen

Membran für den Einsatz im technischen Bereich, etwa zur Steuerung von chemischen Reaktionen, eher geeignet. Nachteile derartiger Membranelektroden sind aber deren starke Abhängigkeit vom pH-Wert und/oder der Ionenstärke der Lösung, deren teilweise sehr lange Ansprechzeit, deren Wirkungsabfall während des Gebrauchs durch Inaktivierung und Auswaschung des Katalysators sowie das Erfordernis, Pufferlösungen als Trägermedium verwenden zu müssen. Gerade bei der $H_2O_2$-Bestimmung wäßriger Reaktionslösungen zwecks Steuerung von Reaktionen unter Einsatz von $H_2O_2$ machen sich die aufgezeigten Nachteile unangenehm bemerkbar, indem ein sehr hoher Aufwand für die Eichung und Kalibrierung erforderlich ist.

Bekannt sind auch fluorimetrische Methoden zur $H_2O_2$-Bestimmung, jedoch eignen sich diese Methoden nur zur Bestimmung von $H_2O_2$ im nanomolaren Bereich - Anal. Chem. 1987, 59, 582-586 und Mikrochim Acta (Wien) 1989, I, 41-50 - und damit nicht Steuerung von Reaktionen im technischen Maßstab.

Bekannt ist auch, die $H_2O_2$-Konzentration durch die Messung der Wärmetönung aus der Reaktion von Wasserstoffperoxid mit Schwefeldioxid zu bestimmen. Diese Methode ist nur zur Bestimmung höherer $H_2O_2$-Konzentrationen anwendbar; zusätzlich ist der Umgang mit $SO_2$ problematisch.

Aufgabe der vorliegenden Erfindung ist, ein Verfahren zur kontinuierlichen Bestimmung der Konzentration an $H_2O_2$ in wäßrigen Lösungen unter Verwendung von Sauerstoffelektroden aufzuzeigen, welches die Nachteile der vorbekannten Verfahren vermeidet und im technischen Maßstab über einen großen Konzentrationsbereich hinweg angewendet werden kann. Eine weitere Aufgabe richtet sich auf die Bereitstellung einer Vorrichtung zur Durchführung des Verfahrens, welche einfach und sicher handhabbar ist und damit im Rahmen der Steuerung chemischer Prozesse eingesetzt werden kann.

Gefunden wurde ein Verfahren zur kontinuierlichen Bestimmung der Konzentration von Wasserstoffperoxid oder Oxidationsmitteln hierfür in wäßrigen Lösungen, das dadurch gekennzeichnet ist, daß ein kontinuierlicher Probenstrom der zu bestimmenden wäßrigen Lösung mit einem kontinuierlichen wäßrigen Verdünnungsstrom, der im Falle der Bestimmung der $H_2O_2$-Konzentration ein Oxidationsmittel zur quantitativen Oxidation des Wasserstoffperoxids zu Wasser und Sauerstoff und im Falle der Bestimmung der Konzentration eines Oxidationsmittels für Wasserstoffperoxid letzteres enthält, unter Bildung eines kontinuierlichen Reaktionsstroms gemischt wird und daß die $O_2$-Konzentration des Verdünnungsstroms nach einer Mischzone und diejenige des Reaktionsstroms nach einer Reaktionszone mittels Sauerstoffelektroden gemessen und die Konzentration des im Probenstrom zu bestimmenden Stoffes aus den gemessenen $O_2$-Konzentrationen und dem Verdünnungsfaktor bestimmt wird.

Die $O_2$-Konzentration des Reaktionsstroms wird nach einer Reaktionszone, innerhalb welcher $H_2O_2$ zu Wasser und Sauerstoff oxidiert wird, gemessen. Während die $O_2$-Konzentration des Reaktionsstroms kontinuierlich gemessen wird, kann an die Stelle einer kontinuierlichen $O_2$-Bestimmung des Verdünnungsstroms eine periodische Bestimmung, etwa im Rahmen der Eichung der Meßvorrichtung treten, sofern die $O_2$-Konzentration im Verdünnungsstrom als ausreichend konstant angenommen werden kann.

Das erfindungsgemäße Verfahren der vorgenannten Art eignet sich in gleicher Weise zur kontinuierlichen Konzentrationsbestimmung von $H_2O_2$ in wäßrigen Lösungen, wie etwa Reaktionslösungen aus Reaktionen, in welchen $H_2O_2$ als Oxidations- oder Reduktionsmittel eingesetzt wird, als auch zur Bestimmung der Konzentration von Oxidationsmitteln für Wasserstoffperoxid in wäßrigen Lösungen. Der wesentliche Unterschied der beiden Verfahrensalternativen besteht nur darin, welche Komponente zu bestimmen und welche dem jeweiligen Verdünnungsstrom zuzuführen ist. Wesentliche Voraussetzung für das Verfahren ist, daß Wasserstoffperoxid und das Oxidationsmittel hierfür rasch und quantitativ unter Bildung von Sauerstoff reagieren. Geeignete Oxidationsmittel für $H_2O_2$ sind beispielsweise Hypochlorit, Cer(IV)-verbindungen, Permanganat und Chlorat. Hypochlorit, insbesondere Natriumhypochlorit, wird als Oxidationsmittel für $H_2O_2$ im erfindungsgemäßen Verfahren bevorzugt, und die Hypochloritkonzentration wäßriger Lösungen läßt sich selbst gut unter Verwendung von $H_2O_2$ im Verdünnungsstrom bestimmen.

Einsatz findet das Verfahren vorzugsweise zur Bestimmung der $H_2O_2$-Konzentration, um den Verlauf chemischer Reaktionen unter Verwendung von $H_2O_2$ zu verfolgen und kontinuierliche Prozesse, wie die Reduzierung des CSB-Werts (chemischer Sauerstoffbedarf) und oxidative Entgiftung von Abwässern und Bleichprozesse, zu steuern. Bei derartigen Prozessen kommt es oft darauf an, eine bestimmte $H_2O_2$-Konzentration, etwa eine solche im Bereich von 0,001 bis etwa 30 Gew.-%, häufiger 0,01 bis 5 Gew.-% und insbesondere 0,01 bis 1 Gew.-%, in der Reaktionslösung aufrechtzuerhalten, um einen ausreichenden Reagensüberschuß und eine ausreichende Reaktionsgeschwindigkeit sicherzustellen.

Gefunden wurde ein weiteres, auf dem gleichen Verfahrensprinzip, nämlich der Verdünnung des Probenstroms und Messung der $O_2$-Konzentrationen im Reaktions- und Verdünnungsstrom, beruhendes Verfahren zur Bestimmung der Wasserstoffperoxidkonzentration wäßriger Lösungen: Dieses Verfahren ist dadurch gekennzeichnet, daß ein kontinuierlicher Probenstrom der zu bestimmenden wäßrigen Lösung mit einem kontinuierlichen Verdünnungsstrom, der im wesentlichen aus Wasser besteht und gelöste oder

suspendierte Zersetzungskatalysatoren für $H_2O_2$ enthalten kann, unter Bildung eines Reaktionsstroms gemischt und dieser durch eine Reaktionszone, welche im Falle der Abwesenheit von Zersetzungskatalysatoren im Verdünnungsstrom ein Festbett aus Zersetzungskatalysatoren für $H_2O_2$ enthält, geleitet wird und daß die $O_2$-Konzentration sowohl des Verdünnungsstroms als auch des Reaktionsstroms nach der Reaktionszone mittels Sauerstoffelektroden gemessen und die $H_2O_2$-Konzentration des Probenstroms aus den gemessenen $O_2$-Konzentrationen und dem Verdünnungsfaktor bestimmt wird.

Aus den zahlreichen bekannten Zersetzungskatalysatoren (siehe "Hydrogen Peroxide" (1955) S. 467-499) sind vorzugsweise solche zu verwenden, welche eine rasche und quantitative Zersetzung des $H_2O_2$ ermöglichen. Die Wirksamkeit läßt sich einfach mittels eines orientierenden Versuchs ermitteln. Obgleich es zwar möglich ist, dem Verdünnungsstrom einen darin gelösten oder suspendierten Zersetzungskatalysator, wie beispielsweise ein lösliches Mangansalz oder Mangandioxid, zuzusetzen, ist es zweckmäßiger, den Zersetzungskatalysator nur als Feststoff in Pulver- oder Granulatform oder auf Trägern fixiert in einem Festbett in der Reaktionszone anzuordnen. Geeignete Feststoff-Zersetzungskatalysatoren sind Metalle, wie Gold, Silber und insbesondere Platin und Palladium, Oxide und Mischoxide der Elemente Eisen, Mangan, Blei, Chrom, Kupfer und Kobalt, wobei Mangandioxid und Bleidioxid sowie Mischoxide der Metalle Mn, Cu, Co, Ag und Pb gemäß DE-OS 22 07 281 besonders wirksam sind. Die Größe des Festbetts wird so bemessen, daß der Reaktionsstrom nach der Passage des Festbetts kein Wasserstoffperoxid mehr enthält.

Vorteil der Ausführungsform unter Verwendung eines Feststoff-Zersetzungskatalysators ist, daß keine zusätzlichen Chemikalien dosiert werden müssen. Nachteilig ist diese Ausführungsform dann, wenn es aufgrund der Zusammensetzung der zu bestimmenden Lösung zu einer Minderung der Katalysatorstandzeit oder gar Katalysatorvergiftung kommt. In derartigen Fällen wird die Ausführungsform unter Verwendung eines dem Verdünnungsstrom zudosierten Oxidationsmittels für $H_2O_2$ bevorzugt.

Das erfindungsgemäße Verfahren wird nachfolgend im wesentlichen anhand der Bestimmung der $H_2O_2$-Konzentration unter Verwendung eines Oxidationsmittels hierfür beschrieben.

Probenstrom und Verdünnungsstrom werden in einem solchen Verhältnis zusammengeführt, daß die mit dem Verdünnungswasser eingebrachte und aus der Zersetzung beziehungsweise Oxidation des Wasserstoffperoxids resultierende Sauerstoff-Gesamtkonzentration nach der Reaktionszone innerhalb des Meßbereichs der verwendeten Sauerstoffelektrode beziehungsweise des $O_2$-Anzeigegerätes liegt. Der Meßbereich des Sauerstoff-Anzeigegeräts kann durch Zurückdrehen eines Steilheitsreglers erweitert werden, wodurch zwar keine absoluten $O_2$-Meßwerte im Reaktionsstrom abgelesen werden können, was aber bei Kenntnis der Steilheit für die Umrechnung in mg $H_2O_2$ pro l keine Rolle spielt. Die Größe des Probenstroms ist im allgemeinen sehr klein gegenüber derjenigen des Verdünnungsstroms. Während erstere mittels einer Dosierpumpe auf einem konstanten niedrigen Wert gehalten wird, kann die Größe des Verdünnungsstroms, sofern sie kontinuierlich erfaßt wird, auch variiert werden. Der Verdünnungsfaktor wird dem erwarteten $H_2O_2$-Konzentrationsbereich der Probenlösung angepaßt. Beispielsweise wird bei einer erwarteten $H_2O_2$-Konzentration von bis zu 10 g/l ein Verdünnungsfaktor im Bereich von etwa 100 bis 200 eingestellt.

Die mit dem Verdünnungsstrom in die Misch- und Reaktionszone eingebrachte Menge Oxidationsmittel für $H_2O_2$ wird so bemessen. daß unter allen Betriebszuständen ein ausreichender stöchiometrischer Überschuß an Oxidationsmittel gegenüber der höchsten erwarteten Wasserstoffperoxidkonzentration anwesend ist - zweckmäßigerweise beträgt der Überschuß mindestens 10, vorzugsweise mehr als 20 bis 100 Mol-%.

Mit einem Hypochlorit als Oxidationsmittel erfolgt die Umsetzung gemäß der allgemeinen Formel $OCl^-$ + $H_2O_2$ → $Cl^-$ + $H_2O$ + $O_2$ rasch und quantitativ. Die Misch- und Reaktionszone muß so dimensioniert sein, daß die Umsetzung nach Verlassen der Reaktionszone quantitativ ist. Die Misch- und Reaktionszone kann als einfaches Rohr oder als Reaktor mit Misch- oder Rührvorrichtung ausgebildet sein. Vorzugsweise wird ein mit einem statischen Mischer ausgestatteter rohrförmiger Reaktor verwendet. Verdünnungsstrom und Probenstrom können vor der eigentlichen Reaktionszone zusammengeführt oder getrennt in die Reaktionszone eingebracht werden.

Die Messung der $O_2$-Konzentration im Verdünnungsstrom erfolgt an einer Stelle nach der Mischzone, in welcher aus dem Verdünnungswasser und dem Oxidationsmittel für $H_2O_2$ beziehungsweise dem $H_2O_2$ im Falle der Konzentrationsbestimmung eines Oxidationsmittels für $H_2O_2$ ein homogenes Gemisch, der sogenannte Verdünnungsstrom, erzeugt wird. Die zweite $O_2$-Meßstelle befindet sich im Reaktionsstrom nach dem Ende der Reaktionszone. Zum Einsatz kommen handelsübliche Sauerstoffelektroden, vorzugsweise solche, welche eine kurze Ansprechzeit aufweisen, und handelsübliche Geräte zur $O_2$-Bestimmung.

Um eine Entgasung in der zu verwendenden Vorrichtung zu vermeiden und konstante Meßbedingungen aufrechtzuerhalten, bilden die von Flüssigkeit durchströmten Elemente der Vorrichtung ein gegen die Atmosphäre geschlossenes System. Ein bevorzugter Abschluß zur Aufrechterhaltung eines konstanten geringen hydrostatischen Drucks stellt ein Hochbehälter dar, in welchen der Reaktionsstrom mündet.

Die Konzentration an $H_2O_2$ beziehungsweise Oxidationsmittel dafür wird aus den beiden $O_2$-Meßwerten und dem Verdünnungsfaktor, d. h. dem Verhältnis der Volumenströme Probenstrom und Verdünnungsstrom ermittelt. Diese Ermittlung erfolgt in dem Fachmann bekannter Weise. Zweckmäßigerweise erfolgt die Ermittlung kontinuierlich mittels eines Prozeßrechners, dem die Meßwerte für die $O_2$-Konzentrationen, die Volumenströme und die bei der Eichung ermittelte Steilheit (mg $H_2O_2$ pro mg $O_2$-Anzeigewert) der Meßvorrichtung eingegeben werden.

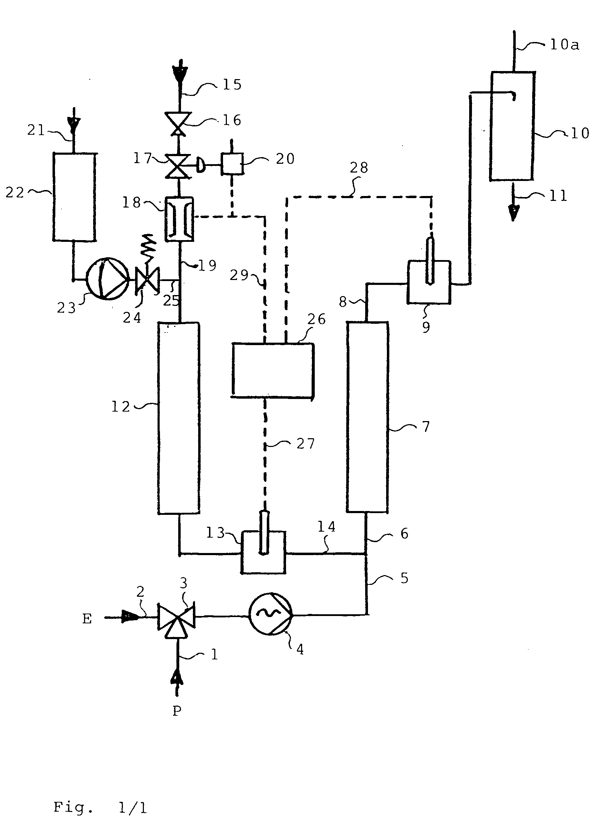

Die erfindungsgemäße Vorrichtung zur kontinuierlichen Bestimmung der Konzentration von Wasserstoffperoxid und Oxidationsmitteln für Wasserstoffperoxid, welche in Fig. 1/1 in einer bevorzugten Ausführungsform dargestellt ist, ist dadurch gekennzeichnet. daß sie umfaßt:

(a) eine Vorrichtung (4) zum Erhalt eines kontinuierlichen, mit konstanter Strömungsgeschwindigkeit fließenden Probenstroms,

(b) eine Vorrichtung zum Erhalt eines kontinuierlichen, mit einstellbarer Strömungsgeschwindigkeit fließenden Verdünnungsstroms, enthaltend eine Vorrichtung (17, 18 und 20) zum Erhalt eines kontinuierlichen Wasserstroms, eine Dosiervorrichtung (23) zur Eindosierung einer wäßrigen Oxidationsmittel- oder $H_2O_2$-Lösung in den kontinuierlichen Wasserstrom und eine Mischvorrichtung (12) zum Mischen der genannten Lösung mit dem Wasserstrom,

(c) eine Misch- und Reaktionsvorrichtung (7) mit einer gemeinsamen (6) oder getrennten Zuleitung für den Proben- und Verdünnungsstrom und einer Ableitung (8) für den Reaktionsstrom,

(d) je eine Vorrichtung zur Messung der $O_2$-Konzentration (13 und 9) im kontinuierlichen Verdünnungsstrom und im Reaktionsstrom nach der Misch- und Reaktionsvorrichtung und

(e) eine zur Prozeßregelung geeignete Vorrichtung (26) mit den elektrischen Signalleitungen (27) und (28) zu den Vorrichtungen (13) und (9) zur Messung der $O_2$-Konzentration und der Signalleitung (29) zu den Vorrichtungen (17), (18) und (20) zum Erhalt eines kontinuierlichen Wasserstroms zur programmierten Bestimmung der $H_2O_2$- beziehungsweise Oxidationsmittelkonzentration aus den gemessenen $O_2$-Konzentrationen und dem Verdünnungsfaktor.

Sofern die $H_2O_2$-Konzentration ohne Zugabe eines Oxidationsmittel bestimmt werden soll, läßt sich auch die vorgenannte Vorrichtung verwenden, wenn in der Misch- und Reaktionsvorrichtung ein Festbett-Zersetzungskatalysator angeordnet ist. In diesem Fall können die Vorrichtungen zum Einspeisen eines Qxidationsmittels in den kontinuierlichen Wasserstrom und die Mischvorrichtung entfallen.

Die Vorrichtung gemäß einer bevorzugten Ausführungsform unter Verwendung eines Oxidationsmittels im Verdünnungsstrom wird unter Bezugnahme auf die schematische Darstellung in Fig. 1/1 näher erläutert.

Der Probenstrom (P) der zu bestimmenden wäßrigen Lösung wird direkt aus dem sie enthaltenden Reaktor oder einer mit diesem verbundenen Ringleitung entnommen und über Leitung (1) der erfindungsgemäßen Vorrichtung zugeführt. Zu Eichzwecken kann über Leitung (2) eine Eichlösung (E) eingespeist werden. Mittels des Dreiwegehahns (3) kann vom Probenstrom (P) auf die Eichlösung (E) umgeschaltet werden. Mittels einer Dosiervorrichtung (4), vorzugsweise einer Dosierpumpe, beispielsweise einer Exzenter-Schneckenpumpe oder einer Membranpumpe, wird die zu bestimmende Lösung über Leitung (5) (Probenstrom) und Leitung (6) (Gemisch aus Probenstrom und Verdünnungsstrom) der Misch- und Reaktionsvorrichtung (7) zugeführt. Bei der Misch- und Reaktionsvorrichtung (7) handelt es sich vorzugsweise um einen rohrförmigen Reaktor mit einer statischen Mischvorrichtung; Statik-Mixer gewährleisten eine sichere Durchmischung und damit eine Reaktion innerhalb einer kurzen Reaktionsstrecke. Der über Leitung (8) die Misch- und Reaktionsvorrichtung (7) verlassende Reaktionsstrom durchfließt die mit einer Sauerstoffelektrode ausgestattete $O_2$-Meßvorrichtung (9). Zweckmäßigerweise ist Leitung (8) mit einem Hochbehälter (10), der über eine Belüftung (10a) und einen Auslaß (11) verfügt, verbunden. Das Verdünnungswasser wird über Leitung (15) zugeführt; sofern erforderlich, wird mittels eines Druckminderers (16) der Druck reduziert. An die Leitung (15) beziehungsweise das Reduzierventil (16) schließt sich eine Vorrichtung (17, 18) zur sicheren Einstellung und Erfassung der Strömungsgeschwindigkeit des Verdünnungswassers an. Besonders vorteilhaft ist eine Kombination aus einem Regelventil (17) und einem Durchflußmeßgerät (18). Bevorzugt werden ein pneumatisch betätigtes Regelventil und ein Rotameter verwendet, welche mittels eines I/P-Wandlers (20) miteinander in Verbindung stehen. Das mit eingestellter Strömungsgeschwindigkeit fließende Verdünnungswasser gelangt über Leitung (19) in eine Mischvorrichtung (12), welche in vergleichbarer Weise ausgestattet ist wie die Misch- und Reaktionsvorrichtung (7). In die Wasserleitung (19) oder in die Mischvorrichtung (12) wird über Leitung (25) die Lösung des Oxidationsmittels eingespeist. Zweckmäßigerweise wird die über Leitung (21) einem Vorratsbehälter (22) zugeführte Oxidationsmittellösung mittels einer sehr feinen Dosierpumpe (23) dosiert; zwischen der Pumpe (23), welche vorzugsweise eine Membranpumpe ist, und der Leitung (19) ist zweckmäßigerweise ein Druckhalteventil (24) angeordnet. Der die Mischvorrichtung (12) verlassende Verdünnungsstrom durchströmt die mit einer Sauerstoffelektrode versehene $O_2$-Meßvorrichtung (13) und verläßt diese über Leitung (14). Der Verdünnungsstrom in Leitung (14) und der Probenstrom in Leitung (5) bilden den Reaktionastrom in Leitung (6). Die bevorzugte Ausführungsform der erfindungsgemäßen Vorrichtung verfügt über einen Prozeßregler (26), der mit den Signalleitungen (27) und (28) zu den Vorrichtungen (13) und (9) zur Messung der $O_2$-Konzentration und der Signalleitung (29) zu den Vorrichtungen (17), (18) und (20) zur Durchflußmessung verbunden ist. Die Pumpenleistung der Dosierpumpe für die Probenlösung wird, sofern diese konstant ist, dem Prozeßregler eingegeben: sofern die Pumpenleistung variabel ist, wird eine Signalleitung (nicht gezeigt) von der Pumpe zum Prozeßregler geführt.

Der Prozeßregler verfügt vorzugsweise über zwei Regelkreise und ein Hintergrundprogramm. Mittels des ersten Regelkreises wird der Verdünnungswasserdurchfluß geregelt, mittels des zweiten Regelkreises erfolgt die Berechnung der aktuellen Konzentration an Wasserstoffperoxid beziehungsweise Oxidationsmittel hierfür; das Hintergrundprogramm enthält das Eich- und Meßgrogramm sowie ein Anwahlprogramm zum Ändern von Variablen sowie zum Ausdruck der Variablen sowie der Meßergebnisse. Nicht gezeigt werden in der Figur 1/1 Stromzuführungskabel und Verbindungskabel vom Prozeßregler (26) zur Meßwarte eines Betriebs, in welchem Wasserstoffperoxid oder ein Oxidationsmittel hierfür als Oxidationsmittel eingesetzt wird. In Figur 1/1 sind ferner Vorratsbehälter und Kreislaufleitung für die Eichlösung sowie Vorrichtungen zur Erzeugung der für Steuerungszwecke eingesetzten Preßluft nicht gezeigt, da es sich um übliche Einrichtungen handelt.

Gegenüber vorbekannten Methoden zur kontinuierlichen Bestimmung der $H_2O_2$-Konzentration beziehungsweise der Konzentration von Oxidationsmitteln hierfür weisen das erfindungsgemäße Verfahren und die zu deren Durchführung zu verwendende Vorrichtung folgende Vorteile auf:

Das Verfahren läßt sich in einfacher Weise durchführen und liefert zuverlässige Werte für die Konzentration der kontinuierlich zu bestimmenden Komponente.

Die Vorrichtung ist einfach bezüglich des Aufbaus und einfach zu handhaben. Die mit der Vorrichtung erhaltenen Konzentrationswerte lassen sich unmittelbar als Eingabewerte zur sicheren Steuerung chemischer Prozesse heranziehen.

Das dem Verfahren zugrundeliegende Prinzip ist spezifisch auf $H_2O_2$ beziehungsweise auf Oxidationsmittel, welche $H_2O_2$ unter $O_2$-Bildung oxidieren, ausgerichtet, so daß andere in der zu bestimmenden Lösung befindliche Stoffe die Konzentrationsbestimmung in der Regel nicht beeinträchtigen. Damit läßt sich die $H_2O_2$-beziehungsweise Oxidationsmittel-Konzentration auch in komplex zusammengesetzten wäßrigen Lösungen, wie Reaktionsgemischen, bestimmen.

Das Verfahren läßt sich unmittelbar zur Steuerung von chemischen Prozessen, in welchen $H_2O_2$ oder ein Oxidationsmittel hierfür ein Reaktionspartner ist, heranziehen.

Durch Variation des Verdünnungsverhältnisses lassen sich niedrige, mittlere und hohe Konzentrationsbereiche der zu bestimmenden Komponente sicher erfassen, weil der mit dem Verdünnungsstrom eingetragene gelöste Sauerstoff bei der Konzentrationsermittlung berücksichtigt wird. Die Verdünnung mindert zudem die Gefahr der Elektrodenverschmutzung und erlaubt auch die Konzentrationsbestimmung aggressiver Lösungen.

Wie dargelegt, kann die $H_2O_2$-Konzentrationsbestimmung auch ohne Zufuhr eines Oxidationsmittels, jedoch in Gegenwart eines Zersetzungskatalysators durchgeführt werden. Wegen der im allgemeinen kürzeren Reaktionszeit für die chemische Oxidation gegenüber der Zersetzung wird die chemische Oxidation dann bevorzugt, wenn in der zu untersuchenden Lösung mit raschen Konzentrationsänderungen zu rechnen ist.

**Beispiel 1**

Messung der $H_2O_2$-Konzentration in einer im Kreislauf geführten Waschlösung eines Abluftwäschers und Steuerung der $H_2O_2$-Zugabe

Auf einer Deponie in Nordrhein-Westfalen fallen kontinuierlich Gase an, die über Bohrungen entnommen und behandelt werden müssen. Hauptbestandteile des Gases sind Methan und Wasserstoff; daneben kommen aber auch $H_2S$ und andere schwefelhaltige Verbindungen darin vor. Zur Entfernung der S-haltigen Bestandteile sowie der ggf. zusätzlich anwesenden anderen leicht oxidierbaren Stoffe ist eine oxidative alkalische Wäsche des Deponiegases vorgesehen; in der im Kreislauf geführten Waschlösung soll dabei ein $H_2O_2$-Gehalt von etwa 4 g/l aufrechterhalten werden.

Mittels der erfindungsgemäßen Vorrichtung (gemäß Figur 1/1) wird unter Verwendung von Natriumhypochlorit als Oxidationsmittel die $H_2O_2$-Konzentration kontinuierlich erfaßt. Die Meßwerte werden als Einheitssignal 4-20 mA (0-5000 mg/l) an einen PID-Regler weitergegeben, über den eine $H_2O_2$-Dosierpumpe angesteuert wird. Größere Abweichungen von der Soll-Konzentration haben folgende Bedeutung:

Unterschreitung: Ungenügende Entfernung von $H_2S$ und anderen oxidierbaren Bestandteilen.

Überschreitung: Erhöhter $H_2O_2$-Verbrauch durch stärkere Selbstzersetzung.

An der Apparatur wurden folgende Einstellungen vorgenommen:

| Verdünnungswasserdruck | 2 bar |
|---|---|
| Verdünnungswassermenge | 30 l/h |
| Probenstrom | 0,25 l/h |
| Konzentration der Eichlösung | 5000 mg $H_2O_2$/l |

Beim vorliegenden Verdünnungsverhältnis von ca. 1:120 ergäbe sich bei der Eichung bei vollständiger Oxidation des $H_2O_2$ zu Sauerstoff eine $O_2$-Konzentration von ca. 42 mg $O_2$/l. Da der Meßbereich des Sauerstoff-Anzeigegerätes nur bis 30 mg $O_2$/l geht, wurde der anwesende Steilheitsregler soweit zurückgedreht, daß ein Wert von 28 mg $O_2$/l angezeigt wurde. Damit konnten zwar keine absoluten Meßwerte an Sauerstoff im Reaktionsstrom abgelesen werden, für die Umrechnung in mg $H_2O_2$/l spielt dies bei Kenntnis der Steilheit (mg $H_2O_2$ pro mg $O_2$-Anzeigewert) jedoch keine Rolle.

Teil der Meßvorrichtung ist ein programmierbares Steuer- und Regel-Gerät mit folgenden Funktionen:
- Berechnung der $H_2O_2$-Konzentration aus den beiden $O_2$-Meßwerten und den bei der Eichung gefundenen Werten. Anzeigen und Ausgeben (4-20 mA) dieser $H_2O_2$-Konzentration
- Regelung der Verdünnungswassermenge
- halbautomatische Eichung.

Die Eichung umfaßt folgende Schritte:
- Ansetzen einer Eichlösung mit 5000 mg $H_2O_2$/l und Einfüllen derselben in ein Vorratsgefäß (in Fig. 1/1 nicht gezeigt). Ein Dreiwege-Kugelhahn (3) wird auf Eichlösung gestellt und das Steuer-/Regelgerät (26) auf Eichen eingestellt;
- Messung der Differenz des $O_2$-Konzentrationmittels der beiden $O_2$-Meßvorrichtungen ((9) und (13)) bei abgeschalteter Dosierpumpe (4);
- Zuschaltung der Eichlösung - Dosierpumpe an;
- Schrittweise Erhöhung des Zuflusses der NaOCl-Menge (wäßrige Lösung) mittels der Dosierpumpe (23), bis keine Erhöhung des $O_2$-Wertes mehr erfolgt;
- Speicherung der Nulldifferenz, der Steilheit und der Leistung der NaOCl-Pumpe.

Es wurden folgende Werte gespeichert:

| Nulldifferenz | 0,24 mg $O_2$/l |
|---|---|
| Steilheit | 225 mg $H_2O_2$ / mg $O_2$ |

Leistung der NaOCl-Pumpe 35 %, entsprechend 23 ml/h.

$$\text{Realer NaOCl-Bedarf: } 0,023 \text{ l/h} \cdot 92\ 000 \text{ mg akt. Cl/l} = 2116 \text{ mg akt. Chlor}$$

$$\text{Theoretischer Bedarf: } 5000 \text{ mg } H_2O_2/l \cdot 0,25 \text{ l/h} \cdot 1,029 \frac{\underline{mg\ Cl}}{mg\ H_2O_2} = 1287 \text{ mg akt. Chlor}$$

Der hohe NaOCl-Überschuß resultierte aus dem Eigenverbrauch des verwendeten Verdünnungswassers.

Nach Umstellen des Dreiwegehahns von der Eichlösung auf den Probenstrom und des Steuer-/Regelgerätes auf Messen erfolgte die Messung:

| Zeit | Verdünnungsstrom mg $O_2$/l | Reaktionsstrom mg $O_2$/l **) | Probenstrom | |
|------|------|------|------|------|
| | | | Anzeige mg $H_2O_2$/l | Titrationswert mg $H_2O_2$/l |
| 9.30 *) | 6,26 | 6,16 | 32 | - |
| 10.00 | 6,31 | 21,93 | 3568 | 3442 |
| 11.00 | 6,22 | 24,71 | 4215 | 4309 |
| 13.00 | 6,24 | 23,38 | 3910 | 3825 |
| 14.00 | 6,35 | 23,29 | 3865 | 3890 |

*) Inbetriebnahme des Abluftwäschers
**) Anzeigewert, d. h. nicht absolut

Die Titration wurde mit Cer(IV)-sulfat durchgeführt. Es zeigte sich eine gute Korelation zwischen gemessenen und titrierten Werten für den $H_2O_2$-Gehalt in der Probenlösung.

**Beispiel 2**

Messung der $H_2O_2$-Konzentration zur Steuerung der Zugabe von $H_2O_2$ in ein Abwasser

In einer Produktionsanlage fallen Abwässer mit Organo-Schwefelverbindungen an. Sobald dieses Abwasser im Kanalsystem in anaerobe Gärung übergeht, entstehen üble Gerüche. Um dies zu vermeiden, wird das Abwasser in einem Batch-Prozeß alkalisch gestellt und mit $H_2O_2$ oxidativ behandelt.

Der Batchprozeß läuft folgendermaßen ab:
- Füllen des Behälters;
- pH-Einstellung;
- Zugabe von $H_2O_2$ 50 %;
- Nachdosierung von $H_2O_2$ in Abhängigkeit vom Bedarf;
- Ablassen des Abwassers mit einer Mindestkonzentration von 500 mg $H_2O_2$/l, nach einer Reaktionszeit von 2 Stunden.

Die Meßapparatur war in diesem Fall nur mit einer Sauerstoffelektrode ausgerüstet, weil das Verdünnungswasser einen sehr konstanten $O_2$-Gehalt aufwies.

Es wurden folgende Einstellungen vorgenommen:

| | |
|------|------|
| Verdünnungswasserdruck | 2 bar |
| Verdünnungswassermenge | 20 l/h |
| Probenstrom | 0,5 l/h |
| Konzentration der Eichlösung | 2000 mg/l |

Bei der Eichung ergaben sich folgende Werte:

$$O_2\text{-Wert des Verdünnungswassers} \quad 5{,}82 \text{ mg/l}$$

$$\text{Steilheit} \quad 91{,}2 \; \frac{\text{mg } H_2O_2}{\text{mg } O_2}$$

Leistung der NaOCl-Pumpe 29 % = 19 ml/h
Die Messung brachte folgenden Verlauf:

| Zeit | $O_2$-Anzeige mg $O_2$/l | Anzeigewert mg $H_2O_2$/l | Titrationswert |
|---|---|---|---|
| 10.00 | 5.60 | -20 | - |
| 10.20 | 20,84 | 1370 | 1210 |
| 10.45 | 15,06 | 843 | 923 |
| 11.20 | 18,40 | 1147 | 1294 |
| 12.00 | 13,39 | 690 | 610 |

Die Meß- und Titrationswerte zeigen eine gute Korelation.

Bezugszeichenliste für Fig. 1/1

| | |
|---|---|
| 1 | Zuleitung Probenstrom |
| 2 | Zuleitung Eichlösung |
| 3 | Dreiwegehahn |
| 4 | Dosierpumpe (Exzenterschneckenpumpe) |
| 5 | Leitung Probenstrom |
| 6 | Zuleitung Reaktionsstrom |
| 7 | Misch- und Reaktionsvorrichtung (Reaktionsrohr mit Static-Mixer) |
| 8 | Ableitung Reaktionsstrom |
| 9 | $O_2$-Meßzelle mit Elektrode |
| 10 | Hochbehälter |
| 10a | Belüftung |
| 11 | Auslauf Reaktionsstrom |
| 12 | Mischvorrichtung (Rohr mit Static-Mixer) |
| 13 | $O_2$-Meßzelle mit Elektrode |
| 14 | Leitung Verdünnungsstrom |
| 15 | Wasserzufuhr |
| 16 | Druckminderer |
| 17 | pneumatisches Regelventil |
| 18 | Durchflußmeßgerät (Rotameter) |
| 19 | Wasserleitung zur Mischvorrichtung |
| 20 | I/P-Wandler |
| 21 | Zufuhr Oxidationsmittellösung |
| 22 | Vorratsbehälter Oxidationsmittel |
| 23 | Dosierpumpe (Membranpumpe) |
| 24 | Druckhalteventil |
| 25 | Leitung Oxidationsmittellösung |
| 26 | Prozeßregler |
| 27, 28 | el. Leitungen von den $O_2$-Elektroden zum Prozeßregler |
| 29 | el. Leitung vom Durchflußmeßgerät zum Prozeßregler |

**Patentansprüche**

1. Verfahren zur kontinuierlichen Bestimmung der Konzentration von Wasserstoffperoxid oder Oxidationsmitteln hierfür in wäßrigen Lösungen,
dadurch gekennzeichnet,
daß ein kontinuierlicher Probenstrom der zu bestimmenden wäßrigen Lösung mit einem kontinuierlichen wäßrigen Verdünnungsstrom, der im Falle der Bestimmung der $H_2O_2$-Konzentration ein Oxida-tionsmittel zur quantitativen Oxidation des Wasserstoffperoxids zu Wasser und Sauerstoff und im Falle der Bestimmung der Konzentration eines Oxidationsmittels für Wasserstoffperoxid letzteres enthält, unter Bildung eines kontinuierlichen Reaktionsstroms gemischt wird und daß die $O_2$-Konzentration des Verdünnungsstroms nach einer Mischzone und diejenige des Reaktionsstroms nach einer Reaktionszone mittels Sauerstoffelektroden gemessen und die Konzentration des im Probenstrom zu bestimmenden Stoffes aus den gemessenen $O_2$-Konzentrationen und dem Verdünnungsfaktor bestimmt wird.

2. Verfahren nach Anspruch 1,
dadurch gekennzeichnet,

10

daß als Oxidationsmittel für Wasserstoffperoxid Natriumhypochlorit verwendet und dieses zur Bildung des Verdünnungsstroms in Form einer wäßrigen Lösung kontinuierlich einem Wasserstrom zudosiert wird.

3. Verfahren zur kontinuierlichen Bestimung der Wasserstoffperoxid-Konzentration wäßriger Lösungen, dadurch gekennzeichnet, daß ein kontinuierlicher Probenstrom der zu bestimmenden wäßrigen Lösung mit einem kontinuierlichen Verdünnungsstrom, der im wesentlichen aus Wasser besteht und gelöste oder suspendierte Zersetzungskatalysatoren für $H_2O_2$ enthalten kann, unter Bildung eines Reaktionsstroms gemischt und dieser durch eine Reaktionszone, welche im Falle der Abwesenheit von Zersetzungskatalysatoren im Verdünnungsstrom ein Festbett aus Zersetzungskatalysatoren für $H_2O_2$ enthält, geleitet wird und daß die $O_2$-Konzentration sowohl des Verdünnungsstroms als auch des Reaktionsstroms nach der Reaktionszone mittels Sauerstoffelektroden gemessen und die $H_2O_2$-Konzentration des Probenstroms aus den gemessenen $O_2$-Konzentrationen und dem Verdünnungsfaktor bestimmt wird.

4. Verfahren nach Anspruch 3, dadurch gekennzeichnet, daß der Verdünnungsstrom frei von Zersetzungskatalysatoren ist und in der Reaktionszone ein Festbett aus Zersetzungskatalysatoren, vorzugsweise aus der Reihe Braunstein, Bleidioxid oder Platinmetalle, angeordnet ist.

5. Vorrichtung zur kontinuierlichen Bestimmung der Konzentration von Wasserstoffperoxid oder Oxidationsmitteln für Wasserstoffperoxid in wäßrigen Lösungen, dadurch gekennzeichnet, daß sie umfaßt:

(a) eine Vorrichtung (4) zum Erhalt eines kontinuierlichen, mit konstanter Strömungsgeschwindigkeit fließenden Probenstroms,

(b) eine Vorrichtung zum Erhalt eines kontinuierlichen, mit einstellbarer Strömungsgeschwindigkeit fließenden Verdünnungsstroms, enthaltend eine Vorrichtung (17, 18 und 20) zum Erhalt eines kontinuierlichen Wasserstroms, eine Dosiervorrichtung (23) zur Eindosierung einer wäßrigen Oxidationsmittel- oder $H_2O_2$-Lösung in den kontinuierlichen Wasserstrom und eine Mischvorrichtung (12) zum Mischen der genannten Lösung mit dem Wasserstrom,

(c) eine Misch- und Reaktionsvorrichtung (7) mit einer gemeinsamen (6) oder getrennten Zuleitung für den Proben- und Verdünnungsstrom und einer Ableitung (8) für den Reaktionsstrom,

(d) je eine Vorrichtung zur Messung der $O_2$-Konzentration (13 und 9) im kontinuierlichen Verdünnungsstrom und im Reaktionsstrom nach der Misch- und Reaktionsvorrichtung und

(e) eine zur Prozeßregelung geeignete Vorrichtung (26) mit den elektrischen Signalleitungen (27) und (28) zu den Vorrichtungen (13) und (9) zur Messung der $O_2$-Konzentration und der Signalleitung (29) zu den Vorrichtungen (17), (18) und (20) zum Erhalt eines kontinuierlichen Wasserstroms zur programmmierten Bestimmung der $H_2O_2$- beziehungsweise Oxidationsmittelkonzentration aus den gemessenen $O_2$-Konzentrationen und dem Verdünnungsfaktor.

6. Vorrichtung zur kontinuierlichen Bestimmung der Konzentration von Wasserstoffperoxid in wäßrigen Lösungen gemäß Anspruch 5. dadurch gekennzeichnet. daß in der Misch- und Reaktionsvorrichtung (7) ein Festbettzersetzungskatalysator angeordnet ist und keine Vorrichtungen zum Einspeisen eines Oxidationsmittels in den kontinuierlichen Wasserstrom und die Mischvorrichtung hierfür anwesend sind.

7. Verwendung der Vorrichtung gemäß Anspruch 5 zur kontinuierlichen Bestimmung der Konzentration von Wasserstoffperoxid oder Oxidationsmitteln für Wasserstoffperoxid in wäßrigen Lösungen gemäß dem Verfahren der Ansprüche 1 und 2.

8. Verwendung der Vorrichtung gemäß Anspruch 6 zur kontinuierlichen Bestimmung der Konzentration von Wasserstoffperoxid in wäßrigen Lösungen gemäß dem Verfahren der Ansprüche 3 und 4.

Fig. 1/1